# EUROPÄISCHE PATENTSCHRIFT

(11) **EP 3 085 986 B1**
(45) Veröffentlichungstag und Bekanntmachung des Hinweises auf die Patenterteilung: **28.11.2018**
(21) Anmeldenummer: 15164177.6
(22) Anmeldetag: 20.04.2015
(51) Int. Cl.: F16F 7/10, F16F 15/03

(54) **SCHWINGUNGSTILGERVORRICHTUNG**
OSCILLATION DAMPING DEVICE
DISPOSITIF D'AMORTISSEUR D'OSCILLATIONS

(43) Veröffentlichungstag der Anmeldung: 26.10.2016
(73) Patentinhaber: Wölfel Beratende Ingenieure GmbH & Co. KG, 97204 Höchberg (DE)
(72) Erfinder: Katz, Sebastian, 97082 Würzburg (DE); Engelhardt, Jürgen, 97249 Eisingen (DE)
(74) Vertreter: Keil & Schaafhausen Patent- und Rechtsanwälte PartGmbB

(56) Entgegenhaltungen:
- JP-A- H0 518 142
- JP-A- H04 347 279
- US-A- 5 713 163
- US-A- 5 778 797

## Beschreibung

Die Erfindung betrifft eine Schwingungstilgervorrichtung gemäß des Oberbegriffs des Anspruchs 1. Derartige Schwingungstilgervorrichtungen sind aus US 5 778 797 A bekannt.

Die Erfindung wird im Folgenden beispielhaft an ihrer Verwendung in hohen, schlanken Bauwerken beschrieben. Unter einem "hohen, schlanken Bauwerk" sind dabei insbesondere Bauwerke wie Schornsteine, Antennen, Hochhäuser, Türme oder Offshore-Bauwerke, wie Transformator-Stationen zu verstehen. Ein weiteres Beispiel für hohe, schlanke Bauwerke sind Türme von Windenergieanlagen.

Der Durchmesser der Rotoren von Windenergieanlagen ist in den letzten Jahren stetig gewachsen. Dabei hat zugleich die Höhe der Türme der Windenergieanlagen zugenommen. Dies ist zum einen darauf zurückzuführen, dass in größeren Höhen bessere Windverhältnisse vorherrschen, zum anderen darauf, dass der Durchmesser der Rotoren vergrößert wurde. Beim Bau derartiger Windenergieanlagen ist man bestrebt, die Materialkosten möglichst gering, die Türme also möglichst schlank zu halten.

Insbesondere im Bereich der Offshore-Windenergieanlagen lassen sich zwei Faktoren identifizieren, die zu einer Schwingungsanregung des Turms der Windenergieanlagen führen. Dies ist zum einen eine Anregung parallel zur Windrichtung durch die Windkräfte selbst. Diese Anregung kann jedoch zum Teil durch aerodynamische Dämpfung kompensiert werden, die durch die drehenden Rotorblätter der Windenergieanlage bewirkt wird. Diese Art der Dämpfung wirkt im Betrieb der Windenergieanlage fast ausschließlich in Windrichtung. Zum anderen kann es zu Anregungen quer zur Windrichtung kommen, die beispielsweise durch Wellen im Meer verursacht sind. Diese Anregungen werden jedoch kaum durch die aerodynamische Dämpfung der Rotorblätter kompensiert. Hier sind zusätzliche Maßnahmen erforderlich, um eine ausreichende Dämpfung der Schwingungszustände des Turms der Windenergieanlage zu erreichen.

Eine solche Maßnahme zur Erhöhung der Dämpfung und damit zur Verminderung der Schwingungen des Turms ist die Verwendung von Schwingungstilgern. Die Schwingungsamplituden der Windenergieanlage sind an deren Gondel am größten. Der optimale Anbringungsort eines Schwingungstilgers ist damit in oder an der Gondel der Windenergieanlage. Die Gondel der Windenergieanlage dreht sich mit dem Windnachführungssystem mit, so dass der Tilger in der Gondel stets quer zur Windrichtung orientiert werden kann. Es lässt sich also eine Dämpfung der Anregungen der Windenergieanlage quer zur Windrichtung erreichen.

Allerdings ist Bauraum zur Anbringung eines Schwingungstilgers in der Gondel nur sehr beschränkt vorhanden.

Der Erfindung liegt daher die Aufgabe zugrunde, eine Schwingungstilgervorrichtung bereitzustellen, die kompakt ausführbar ist.

Diese Aufgabe wird bei einer Schwingungstilgervorrichtung der eingangs genannten Art dadurch gelöst, dass die Tilgermassenanordnung die Schiene zumindest teilweise umgreift. Wenn sich ein Massenschwerpunkt der Tilgermassenanordnung in Schwerkraftrichtung verändert, so wird in einem Betriebszustand der Schwingungstilgervorrichtung die Tilgermassenanordnung aus ihrer Gleichgewichtslage ausgelenkt. Da außerhalb der Gleichgewichtslage Rückstellkräfte auf die Tilgermassenanordnung wirken, kommt es zu einer oszillatorischen, pendelartigen Bewegung der Tilgermassenanordnung um die Gleichgewichtslage. Schwingungsanregungen des hohen, schlanken Bauwerks werden auf die Schwingungstilgervorrichtung übertragen und in die oszillatorische Bewegung der Tilgermassenanordnung umgesetzt. Mittels der Schwingungstilgervorrichtung kommt es so zu einer Dämpfung der Schwingungsanregungen des Bauwerks. Dabei umgreift die Tilgermassenanordnung die Schiene zumindest teilweise, und ist somit in Schwerkraftrichtung an der Schiene abgestützt. Weiterhin kann hierdurch ein seitlicher Versatz der Schwingungstilgeranordnung in einer Richtung quer zu einer Axialrichtung der Schiene weitgehend vermieden werden. Die Tilgermassenanordnung umgreift die Schiene zumindest teilweise, so dass die Schiene zumindest teilweise innerhalb der Tilgermassenanordnung angeordnet ist. Die Tilgermassenanordnung kann hierzu in einem Betriebszustand der Schwingungstilgervorrichtung in der Schwerkraftrichtung oberhalb einer Tilgermasse einen Aufnahmeraum freilassen. Die Schiene ist in dem Aufnahmeraum angeordnet. Durch eine zumindest teilweise Aufnahme der Schiene innerhalb der Tilgermassenanordnung lässt sich die Schwingungstilgervorrichtung kompakt ausführen.

Die Tilgermassenanordnung ist mit einer Kopplungsvorrichtung verbunden, die mindestens eine sekundäre Tilgermasse aufweist. Hierdurch ist es möglich, eine Frequenzabstimmung der Schwingungstilgervorrichtung vorzunehmen. Die Anzahl der sekundären Tilgermassen kann dabei in Abhängigkeit von der benötigten Frequenzabstimmung angepasst werden. Die Kopplungsvorrichtung ist mit der Tilgermassenanordnung verbunden, so dass sie deren oszillatorischer Bewegung um ihre Gleichgewichtslage folgt. Dasselbe gilt somit für die sekundäre Tilgermasse. Dabei ist bevorzugt, dass die Tilgermassenanordnung mindestens eine Laufrolle mit einer Achse und die Schiene mindestens ein Trägerelement aufweist, wobei die Achse mit dem Trägerelement einen spitzen Winkel einschließt. Dieses Trägerelement dient dazu, die Schwingungstilgervorrichtung an einer Struktur des Bauwerks zu befestigen. Hierdurch kann die Schwingungstilgervorrichtung an bereits vorhandenen Strukturen von Bauwerken beispielsweise aufgehängt, und somit "nachgerüstet" werden. Die Achse der Laufrolle steht senkrecht zu einer Abrollrichtung der Laufrolle. Die Laufrolle ist dabei derartig auf das Trägerelement zu geneigt, dass die Achse mit dem Trägerelement einen spitzen Winkel einschließt. Eine Neigung der Laufrolle in eine Richtung auf das Trägerelement zu ermöglicht dabei einen kompakten Aufbau der Schwingungstilgervorrichtung.
Dabei ist bevorzugt, dass die Laufrolle an der Schiene anliegt und das Trägerelement mit einem Befestigungsabschnitt der Schiene verbunden ist. Die Laufrolle dient dazu, die Tilgermassenanordnung aus ihrer Gleichgewichtslage heraus verlagern zu können. Hierzu liegt die Laufrolle an der Schiene an, so dass sie auf dieser abrollen kann. Zusätzlich zu dem Abschnitt, an dem die Laufrolle an der Schiene anliegt, weist die Schiene einen Befestigungsabschnitt auf. Mit diesem ist das Trägerelement verbunden. Das Trägerelement ist also in einem Betriebszustand der Schwingungstilgervorrichtung zugleich mit der Schiene und der Struktur des Bauwerks verbunden. Da die Tilgermassenanordnung die Schiene zumindest teilweise umgreift, wird eine platzsparende Bauweise der Schwingungstilgervorrichtung erreicht.

Weiterhin ist bevorzugt, dass die Tilgermassenanordnung mindestens zwei Laufrollen mit jeweils einer Achse aufweist, wobei die Achsen relativ zueinander geneigt sind. Durch die Verwendung von mindestens zwei Laufrollen wird zum einen eine bessere Führung der Tilgermassenanordnung bei der oszillatorischen Bewegung um ihre Gleichgewichtslage erreicht. Zum anderen kann man die Achsen der zwei Laufrollen derartig orientieren, dass sie aufeinander zu geneigt sind. Beide Laufrollen liegen dann an der Schiene an und sind in eine Richtung auf das Trägerelement hin orientiert. Es lässt sich eine platzsparende Bauweise und Aufhängung der Tilgermassenanordnung an der Schiene erreichen. Ebenso lässt sich eine zuverlässige Führung der Tilgermassenanordnung auf einer gekrümmten Schiene erreichen.

Hierbei ist bevorzugt, dass die erste Laufrolle auf einer der zweiten Laufrolle gegenüberliegenden Seite der Schiene angeordnet ist. Durch die Verwendung zweier Laufrollen, deren Achsen relativ zueinander geneigt sind, lässt sich somit ein seitlicher Versatz der Tilgermassenanordnung quer zur Axialrichtung der Schiene weitestgehend vermeiden. Beide Laufrollen sind in eine Richtung auf das Trägerelement hin geneigt. Hierdurch lässt sich wiederum eine platzsparende Bauweise der Schwingungstilgervorrichtung erreichen. Auch ist eine zuverlässige Führung der Tilgermassenanordnung an der Schiene gewährleistet.

Es ist bevorzugt, dass eine erste Wirbelstromdämpfungsanordnung innerhalb der Tilgermassenanordnung angeordnet ist und/oder die Laufrolle eine zweite Wirbelstromdämpfungsanordnung aufweist. Hierdurch wird eine Dämpfung der Schwingungszustände der Schwingungstilgervorrichtung erreicht. Die Anordnung der ersten Wirbelstromdämpfungsanordnung innerhalb der Tilgermassenanordnung ermöglicht dabei eine kompakte und gekapselte Ausführung der Schwingungstilgervorrichtung. Die erste Wirbelstromdämpfungsanordnung kann dabei beispielsweise in einer Nut der Tilgermasse aufgenommen werden. Alternativ oder zusätzlich ist es möglich, die zweite Wirbelstromdämpfungsanordnung in die Laufrolle zu integrieren. Der Bauraumbedarf für die Wirbelstromdämpfungsanordnung kann gering gehalten werden.

Hierbei ist bevorzugt, dass die Tilgermassenanordnung einen Drehpunkt aufweist, wobei die sekundäre Tilgermasse mit der Kopplungsvorrichtung auf einer der Tilgermassenanordnung abgewandten Seite des Drehpunktes verbunden ist. Tilgermassenanordnung und sekundäre Tilgermasse haben somit einen gemeinsamen Drehpunkt. Die Kopplungsvorrichtung dient dann dazu, die sekundäre Tilgermasse auf einem konstanten Abstand zum Drehpunkt zu halten. Diese Aufgabe übernimmt bei der Tilgermassenanordnung deren Zusammenwirken mit der Schiene. Der Abstand zwischen den Massenschwerpunkten der Tilgermassenanordnung und der sekundären Tilgermasse zum Drehpunkt, sowie deren Trägheit bei ihrer Oszillation um die Gleichgewichtslage der Tilgermassenanordnung bestimmen die Eigenfrequenz der Schwingungstilgervorrichtung. Sowohl die Tilgermassenanordnung als auch die sekundäre Tilgermasse beschreiben dabei eine oszillatorische Bewegung um ihre Gleichgewichtslage.

Dabei ist bevorzugt, dass die Kopplungsvorrichtung und die Schiene kreisringförmig ausgebildet sind, wobei ein Krümmungsradius der Kopplungsvorrichtung auf einen Krümmungsradius der Schiene abgestimmt ist. Die kreisringförmige Ausbildung der Kopplungsvorrichtung und der Schiene ermöglicht es, die oszillatorische Bewegung der Tilgermassenanordnung und damit der Kopplungsvorrichtung um die Gleichgewichtslage als eine Pendelbewegung auszugestalten. Die Schwerkräfte auf die Tilgermassenanordnung bilden dann die Rückstellkräfte auf die Tilgermassenanordnung, wenn sich diese außerhalb ihrer Gleichgewichtslage befindet. Dadurch, dass der Krümmungsradius der Kopplungsvorrichtung auf den Krümmungsradius der Schiene abgestimmt ist, lässt sich zum einen eine zuverlässige Befestigung der Kopplungsvorrichtung an der Tilgermassenanordnung erreichen. Zum anderen ist damit gewährleistet, dass die Kopplungsvorrichtung und somit die sekundäre Tilgermasse zuverlässig der Bewegung der Tilgermassenanordnung auf der Schiene folgen können. Weiterhin ermöglicht die kreisringförmige Ausführung der Kopplungsvorrichtung, die Struktur, an der die Schwingungstilgervorrichtung befestigt wird, im Inneren der Kopplungsvorrichtung aufzunehmen. Die Schwingungstilgervorrichtung kann also beispielsweise außerhalb der Gondel einer Windenergieanlage angebracht werden. In diesem Fall würde die Kopplungsvorrichtung die Gondel in ihrem Inneren aufnehmen. Dies bietet sich insbesondere bei Windenergieanlagen mit großem Generator oder Getriebegehäuse an.

Auch ist bevorzugt, dass die Kopplungsvorrichtung eine Aufnahmeöffnung aufweist, in die das Trägerelement in einer Radialrichtung hineinragt. Eine im Inneren der Kopplungsvorrichtung angeordnete Struktur des Bauwerks kann somit zugleich als Befestigungspunkt für die Schwingungstilgervorrichtung dienen. Das Trägerelement ragt dabei ausgehend vom Befestigungsabschnitt der Schiene durch die Aufnahmeöffnung der Kopplungsvorrichtung hindurch. Es wird an der im Inneren der Kopplungsvorrichtung aufgenommen Struktur befestigt. Es lässt sich wiederum eine kompakt ausführbare Schwingungstilgervorrichtung bereitstellen.
Es ist bevorzugt, dass die Tilgermassenanordnung mindestens einen Aktor aufweist, der mit der Laufrolle zusammenwirkt und mittels mindestens eines Reglers ansteuerbar ist. Das Implementieren eines zusätzlichen Aktors ermöglicht es, die Schwingungsminderung weiter zu verbessern und/oder die notwendige Masse der Tilgermassenanordnung zu reduzieren. Eine Möglichkeit, einen derartigen Aktor auszuführen, ist es, die Laufrollen mit einem Rotationsmotor anzutreiben. Die Schwingungstilgervorrichtung kann somit als aktiver Tilger ausgebildet werden.
Schließlich ist bevorzugt, dass die Tilgermassenanordnung eine Sensorik aufweist, mit der ein Schwingungszustand der Tilgermassenanordnung erfassbar ist und mit der der Regler ansteuerbar ist. Der Schwingungszustand der Tilgermassenanordnung entspricht dabei annähernd dem Schwingungszustand des Bauwerks, in dem die Schwingungstilgervorrichtung angeordnet ist. Dieser Schwingungszustand wird durch die Sensorik erfasst und an den Regler übermittelt, der den Aktor ansteuert. Die Schwingungstilgervorrichtung ist als aktiver Schwingungsdämpfer ausführbar.
Die Erfindung wird im Folgenden anhand zweier bevorzugter Ausführungsbeispiele in Verbindung mit den Zeichnungen beschrieben.
Hierin zeigen:
Fig. 1 eine Schnittdarstellung einer ersten nicht erfindungsgemäßen Ausführungsform einer Schwingungstilgervorrichtung, und
Fig. 2 eine perspektivische Darstellung einer erfindungsgemäßen Schwingungstilgervorrichtung mit einer Kopplungsvorrichtung.

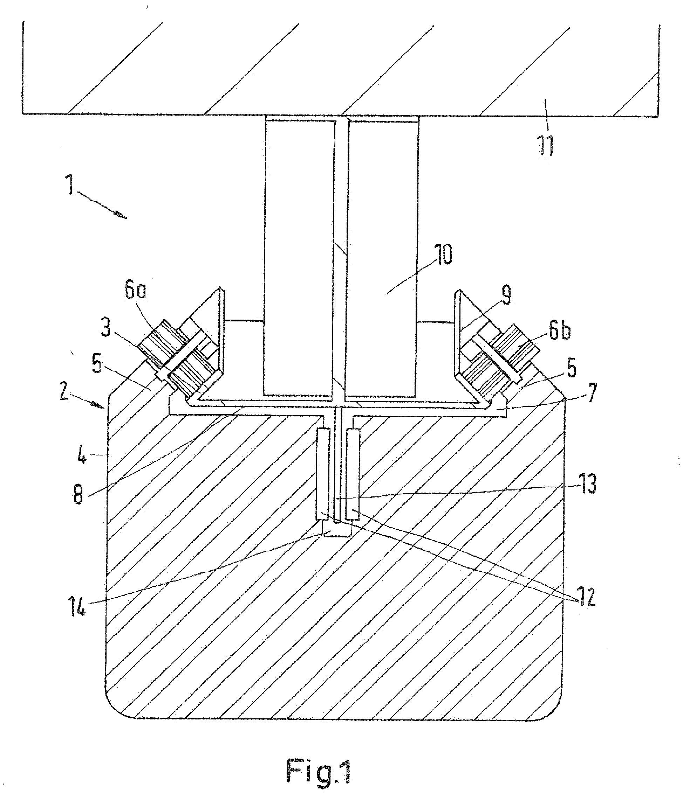

Fig. 1 zeigt eine Schwingungstilgervorrichtung 1 mit einer Tilgermassenanordnung 2. Die Tilgermassenanordnung 2 umgreift eine Schiene 3 zumindest teilweise und weist eine Tilgermasse 4 auf. Die Tilgermasse 4 weist eine Laufrollenaufnahme 5 auf, an der eine erste Laufrolle 6a und eine zweite Laufrolle 6b befestigt sind. Die Laufrollen 6a, 6b liegen an der Schiene 3 an, die wiederum in einem Aufnahmeraum 7 innerhalb der Tilgermassenanordnung 2 angeordnet ist. Die Schiene 3 weist dabei einen Befestigungsabschnitt 8 auf und mündet an ihren Umfangsenden jeweils in einen Führungsabschnitt 9. Der Befestigungsabschnitt 8 ist mit einem Trägerelement 10 verbunden, das wiederum an einer Struktur 11 eines Bauwerks befestigt ist. Innerhalb der Tilgermassenanordnung 2 ist eine erste Wirbelstromdämpfungsanordnung angeordnet. Diese setzt sich aus einer Magnetanordnung 12 und einer Leiteranordnung 13 zusammen. Diese sind beide in einer Nut 14 angeordnet.
Die Schiene 3 ist gekrümmt ausgeführt. Hierdurch weist die Tilgermassenanordnung 2 eine Gleichgewichtslage auf, aus der heraus sie verlagerbar ist, wobei außerhalb dieser Gleichgewichtslage Rückstellkräfte auf die Tilgermassenanordnung 2 wirken. Die Tilgermassenanordnung 2 und dabei insbesondere die Tilgermasse 4 führen dann eine pendelartige Bewegung um die Gleichgewichtslage durch. Die Tilgermassenanordnung 2 wird dabei durch Schwingungsanregungen des Bauwerks, in dem sie angeordnet ist, und die sich auf die Schwingungstilgervorrichtung übertragen, aus der Gleichgewichtslage ausgelenkt.
Die Pendelbewegung der Tilgermasse 4 wird dabei in einer Axialrichtung der Schiene 3 geführt. Hierzu liegen die Laufrollen 6a, 6b an der Schiene 3 an. Die Laufrollen 6a, 6b sind dabei über die Laufrollenaufnahme 5 mit der

Tilgermasse 4 verbunden. Die Laufrollenaufnahme 5 ist in eine Richtung auf das Trägerelement 10 zu geneigt. Achsen der Laufrollen 6a, 6b schließen somit mit dem Trägerelement 10 einen spitzen Winkel ein. Die Achsen der Laufrollen 6a, 6b schließen mit dem Befestigungsabschnitt 8 der Schiene 3 ebenso einen spitzen Winkel ein. Hierdurch lässt sich eine kompakte Ausführung der Schwingungstilgervorrichtung 1 ermöglichen. Weiterhin wird ein seitlicher Versatz der Laufrollen 6a, 6b in eine Richtung quer zur Axialrichtung der Schiene 3 weitestgehend vermieden. Einer zuverlässigen Führung der Laufrollen 6a, 6b in der Axialrichtung der Schiene 3 und zur Verhinderung des seitlichen Versatzes dient dabei ebenso der Führungsabschnitt 9. Die erste Laufrolle 6a ist auf einer der zweiten Laufrolle 6b gegenüberliegenden Seite der Schiene 3 angeordnet.

Innerhalb der Tilgermassenanordnung 2 ist die erste Wirbelstromdämpfungsanordnung vorgesehen. Diese weist die Magnetanordnung 12 aus zwei Magneten auf, die in der Nut 14 der Tilgermasse 4 fest mit der Tilgermasse 4 verbunden sind. Zwischen den Magneten der Magnetanordnung 12 ist die Leiteranordnung 13 angeordnet. Die Leiteranordnung 13 kann dabei beispielsweise aus einem elektrischen Leiter, insbesondere einer Leiterplatte, gebildet sein. Es ist möglich, die Leiteranordnung 13 einstückig mit dem Befestigungsabschnitt 8 der Schiene 3 auszubilden. Bei der Bewegung der Tilgermasse 4 werden somit die Magnetanordnung 12 und die Leiteranordnung 13 relativ zueinander bewegt. Es kommt zu einer Wirbelstromdämpfung der pendelartigen Bewegung der Tilgermasse 4. Alternativ oder zusätzlich hierzu kann vorgesehen sein, eine zweite Wirbelstromdämpfungsanordnung (nicht dargestellt) in den Laufrollen 6a, 6b anzuordnen.

Das Trägerelement 10 ist im Aufnahmeraum 7 der Tilgermassenanordnung 2 aufgenommen. Der Aufnahmeraum 7 wird dabei durch die Tilgermassenanordnung 2 in einer Schwerkraftrichtung oberhalb der Tilgermasse 4 freigelassen. Im Aufnahmeraum 7 ist dabei auch der Befestigungsabschnitt 8 der Schiene 3 angeordnet. Insoweit lässt sich die Schwingungstilgervorrichtung 1 kompakt ausführen. Sie kann dann mittels des Trägerelements 10 an der in dem Bauwerk vorhandenen, tragenden Struktur 11 befestigt werden. Hierdurch können die für die Schwingungstilgervorrichtung 1 zusätzlich benötigten Komponenten, insbesondere die gekrümmt ausgeführte Schiene 3, gewichts- und kostengünstig ausgebildet werden. Durch den Anbringungsort an der Struktur 11 können große Wege der Tilgermassenanordnung 2 realisiert werden. Sollte dennoch ein Anschlag notwendig sein, so kann dieser strukturmechanisch günstig realisiert werden, da die auftretenden Kräfte in ein massives, schweres und steifes Bauteil der Struktur 11 eingebracht werden können.

Die Möglichkeit, große Wege für die Tilgermassenanordnung 2 bereitzustellen, erlaubt auch den effizienten Einsatz von aktiven Schwingungstilgervorrichtungen 1. Bei den aktiven Schwingungstilgervorrichtungen 1 weist die Tilgermassenanordnung 2 mindestens einen Aktor (nicht dargestellt) auf, der mit mindestens einer der Laufrollen 6a, 6b zusammenwirkt und mittels mindestens eines Reglers (nicht dargestellt) angesteuert wird. Der Aktor kann beispielsweise durch Implementieren eines aktiven Stellglieds, beispielsweise eines Motors, ausgeführt werden. Durch den Aktor lässt sich die Schwingungstilgung weiter verbessern und/oder die notwendige Tilgermasse 4 weiter reduzieren. Es kann beispielsweise vorgesehen sein, die Laufrollen 6a, 6b mit einem Rotationsmotor (nicht dargestellt) anzutreiben.

Eine weitere Verbesserung der Schwingungstilgervorrichtung 1 kann dadurch erreicht werden, dass die Tilgermassenanordnung 2 eine Sensorik (nicht dargestellt) aufweist, mit der ein Schwingungszustand der Tilgermassenanordnung 2 erfassbar ist. Die Sensorik steuert den Regler an.

Der Regler wiederum steuert den Aktor an. Somit kann der Aktor in Abhängigkeit vom Schwingungszustand der Tilgermassenanordnung 2 betrieben werden. Eine effektive Schwingungstilgung wird ermöglicht.

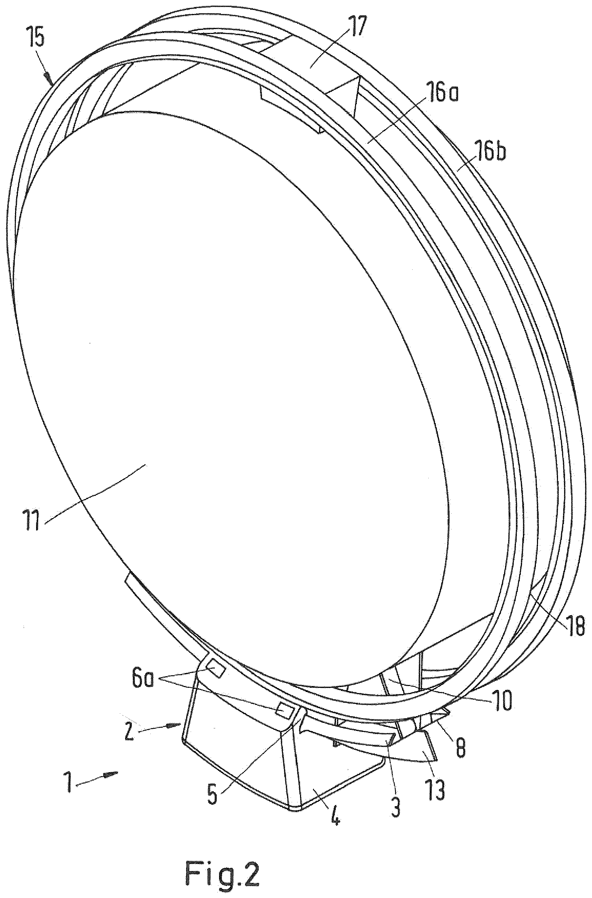

Fig. 2 zeigt die Schwingungstilgervorrichtung 1 mit einer Kopplungsvorrichtung 15, die mit der Tilgermassenanordnung 2 verbunden ist. Die Kopplungsvorrichtung 15 ist dabei aus einem ersten Kopplungsring 16a und einem zweiten Kopplungsring 16b gebildet. Zwischen den beiden Kopplungsringen 16a, 16b ist eine sekundäre Tilgermasse 17 angeordnet. Zwischen den Kopplungsringen 16a, 16b ist eine Aufnahmeöffnung 18 frei gelassen.

Die Schiene 3 ist im dargestellten Ausführungsbeispiel gekrümmt ausgeführt. Es sind zwei erste Laufrollen 6a vorgesehen. Die Achsen der zwei ersten Laufrollen 6a sind dabei relativ zueinander geneigt. Hierdurch lässt sich ein zuverlässiges Anliegen der zwei ersten Laufrollen 6a an der Schiene 3 erreichen.

Die Kopplungsvorrichtung 15 weist einen Krümmungsradius auf, der auf einen Krümmungsradius der Schiene 3 abgestimmt ist. Die Kopplungsvorrichtung 15 ist an der Laufrollenaufnahme 5 mit der Tilgermassenanordnung 2 verbunden. Die Kopplungsvorrichtung 15 folgt somit der Pendelbewegung der Tilgermassenanordnung 2 um ihre Gleichgewichtslage.

Die Verbindung der sekundären Trägermasse 17 mit der Kopplungsvorrichtung 15 legt einen gemeinsamen Drehpunkt von Tilgermassenanordnung 2 und sekundärer Tilgermasse 17 fest. Die Tilgereigenfrequenz der Schwingungstilgervorrichtung 1 wird über zwei Faktoren bestimmt. Dies ist zum einen der Abstand zwischen einem Massenschwerpunkt der Tilgermassenanordnung 2 und dem Drehpunkt sowie dessen Drehträgheit um eine durch den Drehpunkt verlaufende Rotationsachse. Durch Anbringung der sekundären Tilgermasse 17 auf einer der Tilgermassenanordnung 2 abgewandten Seite des Drehpunktes wird dann eine Frequenzabstimmung der Schwingungstilgervorrichtung ermöglicht.

Die Ausbildung der Kopplungsvorrichtung 15 mittels der zwei Kopplungsringe 16a, 16b ermöglicht es, die Struktur 11 innerhalb der Kopplungsvorrichtung 15 aufzunehmen. Hierdurch wird es insbesondere möglich, die Schwingungstilgervorrichtung 1 außerhalb der Gondel einer Windenergieanlage anzubringen. Dies bietet sich beispielsweise bei Windenergieanlagen mit großem Generator oder Getriebegehäuse an.

Um weiterhin einfache Montage und kompakte Ausführung der Schwingungstilgervorrichtung 1 zu ermöglichen, weist die Kopplungsvorrichtung 15 die Aufnahmeöffnung 18 auf. Das Trägerelement 10 kann dann in einer Radialrichtung auf die Struktur 11 zu die Aufnahmeöffnung 18 durchragen. Die Kopplungsvorrichtung 15 kann ungehindert der Pendelbewegung der Tilgermassenanordnung 2 folgen. Eine Anbringung der Schwingungstilgervorrichtung 1 an im Bauwerk vorhandenen Strukturen 11 ist möglich.

## Patentansprüche

1. Schwingungstilgervorrichtung (1) für hohe, schlanke Bauwerke, mit einer Tilgermassenanordnung (2), die eine Gleichgewichtslage aufweist und aus dieser heraus verlagerbar ist, wobei außerhalb der Gleichgewichtslage Rückstellkräfte auf die Tilgermassenanordnung (2) wirken, und mit mindestens einer Schiene (3), wobei die Tilgermassenanordnung (2) mit der Schiene (3) zusammenwirkt und die Schiene (3) zumindest teilweise umgreift, **dadurch gekennzeichnet, dass** die Tilgermassenanordnung (2) mit einer Kopplungsvorrichtung (15) verbunden ist, die mindestens eine sekundäre Tilgermasse (17) aufweist.

2. Schwingungstilgervorrichtung nach Anspruch 1, **dadurch gekennzeichnet, dass** die Tilgermassenanordnung (2) mindestens eine Laufrolle (6a) mit einer Achse und die Schiene (3) mindestens ein Trägerelement (10) aufweist, wobei die Achse mit dem Trägerelement (10) einen spitzen Winkel einschließt.

3. Schwingungstilgervorrichtung nach Anspruch 2, **dadurch gekennzeichnet, dass** die Laufrolle (6a) an der Schiene (3) anliegt und das Trägerelement (10) mit einem Befestigungsabschnitt (8) der Schiene (3) verbunden ist.

4. Schwingungstilgervorrichtung nach einem der Ansprüche 1 bis 3, **dadurch gekennzeichnet, dass** die Tilgermassenanordnung (2) mindestens zwei Laufrollen (6a, 6b) mit jeweils einer Achse aufweist, wobei die Achsen relativ zueinander geneigt sind.

5. Schwingungstilgervorrichtung nach Anspruch 4, **dadurch gekennzeichnet, dass** die erste Laufrolle (6a) auf einer der zweiten Laufrolle (6b) gegenüberliegenden Seite der Schiene (3) angeordnet ist.

6. Schwingungstilgervorrichtung nach einem der Ansprüche 2 bis 5, **dadurch gekennzeichnet, dass** eine erste Wirbelstromdämpfungsanordnung (12, 13) innerhalb der Tilgermassenanordnung (3) angeordnet ist und/oder die Laufrolle (6a, 6b) eine zweite Wirbelstromdämpfungsanordnung aufweist.

7. Schwingungstilgervorrichtung nach einem der Ansprüche 1 bis 6, **dadurch gekennzeichnet, dass** die Tilgermassenanordnung (2) einen Drehpunkt aufweist, wobei die sekundäre Tilgermasse (17) mit der Kopplungsvorrichtung (15) auf einer der Tilgermassenanordnung (2) abgewandten Seite des Drehpunkts verbunden ist.

8. Schwingungstilgervorrichtung nach einem der Ansprüche 1 bis 7, **dadurch gekennzeichnet, dass** die Kopplungsvorrichtung (15) und die Schiene (3) kreisringförmig ausgebildet sind, wobei ein Krümmungsradius der Kopplungsvorrichtung (15) auf einen Krümmungsradius der Schiene (3) abgestimmt ist.

9. Schwingungstilgervorrichtung nach einem der Ansprüche 1 bis 8 **dadurch gekennzeichnet, dass** die Kopplungsvorrichtung (15) eine Aufnahmeöffnung (18) aufweist, in die das Trägerelement (10) in einer Radialrichtung hineinragt.

10. Schwingungstilgervorrichtung nach einem der Ansprüche 1 bis 9, **dadurch gekennzeichnet, dass** die Tilgermassenanordnung (2) mindestens einen Aktor aufweist, der mit der Laufrolle (6a, 6b) zusammenwirkt und mittels mindestens eines Reglers ansteuerbar ist.

11. Schwingungstilgervorrichtung nach Anspruch 10, **dadurch gekennzeichnet, dass** die Tilgermassenanordnung (2) eine Sensorik aufweist, mit der ein Schwingungszustand der Tilgermassenanordnung (2) erfassbar ist, und mit der der Regler ansteuerbar ist.

## Claims

1. Oscillation damping device (1) for tall, narrow constructions, comprising a damping mass arrangement (2) that has a position of equilibrium and can be moved out of said position, restoring forces acting on the damping mass arrangement (2) outside the position of equilibrium, and comprising at least one rail (3), the damping mass arrangement (2) cooperating with the rail (3) and engaging around the rail (3) at least in part, **characterised in that** the damping mass arrangement (2) is connected to a coupling device (15) which has at least one secondary damping mass (17).

2. Oscillation damping device according to claim 1, **characterised in that** the damping mass arrangement (2) comprises at least one roller (6a) having an axis and the rail (3) comprises at least one carrier element (10), the axis and the carrier element (10) enclosing an acute angle.

3. Oscillation damping device according to claim 2, **characterised in that** the roller (6a) abuts the rail (3) and the carrier element (10) is connected to a fastening portion (8) of the rail (3).

4. Oscillation damping device according to any of claims 1 to 3, **characterised in that** the damping mass arrangement (2) comprises at least two rollers (6a, 6b) that each have an axis, the axes being inclined relative to one another.

5. Oscillation damping device according to claim 4, **characterised in that** the first roller (6a) is arranged on a side of the rail (3) opposite the second roller (6b).

6. Oscillation damping device according to any of claims 2 to 5, **characterised in that** a first eddy current damping arrangement (12, 13) is arranged inside the damping mass arrangement (3) and/or the roller (6a, 6b) comprises a second eddy current damping arrangement.

7. Oscillation damping device according to any of claims 1 to 6, **characterised in that** the damping mass arrangement (2) has a pivotal point, the secondary damping mass (17) being connected to the coupling device (15) on a side of the pivotal point that faces away from the damping mass arrangement (2).

8. Oscillation damping device according to any of claims 1 to 7, **characterised in that** the coupling device (15) and the rail (3) are annular, a radius of curvature of the coupling device (15) being matched to a radius of curvature of the rail (3).

9. Oscillation damping device according to any of claims 1 to 8, **characterised in that** the coupling device (15) has a receiving opening (18) into which the carrier element (10) projects in a radial direction.

10. Oscillation damping device according to any of claims 1 to 9, **characterised in that** the damping mass arrangement (2) comprises at least one actuator which cooperates with the roller (6a, 6b) and can be actuated by means of at least one regulator.

11. Oscillation damping device according to claim 10, **characterised in that** the damping mass arrangement (2) comprises a sensor system by means of which an oscillation state of the damping mass arrangement (2) can be detected, and by means of which the regulator can be actuated.

## Revendications

1. Dispositif d'amortisseur d'oscillations (1) pour des structures élevées, étroites, avec un agencement de masse d'amortissement (2) qui présente un état d'équilibre et peut être sorti de celui-ci, dans lequel en dehors de l'état d'équilibre, des forces de rappel agissent sur l'agencement de masse d'amortissement (2), et avec au moins un rail (3), dans lequel l'agencement de masse d'amortissement (2) coopère avec le rail (3) et enserre au moins partiellement le rail (3), **caractérisé en ce que** l'agencement de masse d'amortissement (2) est relié à un dispositif de couplage (15) qui présente au moins une masse d'amortissement secondaire (17).

2. Dispositif d'amortisseur d'oscillations selon la revendication 1, **caractérisé en ce que** l'agencement de masse d'amortissement (2) présente au moins une poulie (6a) avec un axe et le rail (3) présente au moins un élément porteur (10), dans lequel l'axe avec l'élément porteur (10) inclut un angle aigu.

3. Dispositif d'amortisseur d'oscillations selon la revendication 2, **caractérisé en ce que** la poulie (6a) est adjacente au rail (3) et l'élément porteur (10) est relié à une partie de fixation (8) du rail (3).

4. Dispositif d'amortisseur d'oscillations selon l'une quelconque des revendications 1 à 3, **caractérisé en ce que** l'agencement de masse d'amortissement (2) présente au moins deux poulies (6a, 6b) avec respectivement un axe, dans lequel les axes sont inclinés l'un par rapport à l'autre.

5. Dispositif d'amortisseur d'oscillations selon la revendication 4, **caractérisé en ce que** la première poulie (6a) est disposée sur un côté du rail (3) opposé à la deuxième poulie (6b).

6. Dispositif d'amortisseur d'oscillations selon l'une quelconque des revendications 2 à 5, **caractérisé en ce qu'**un premier agencement d'amortissement à courant de Foucault (12, 13) est disposé à l'intérieur de l'agencement de masse d'amortissement (3) et/ou la poulie (6a, 6b) présente un deuxième agencement d'amortissement à courant de Foucault.

7. Dispositif d'amortisseur d'oscillations selon l'une quelconque des revendications 1 à 6, **caractérisé en ce que** l'agencement de masse d'amortissement (2) présente un point de rotation, dans lequel la masse d'amortissement secondaire (17) est reliée au dispositif de couplage (15) sur un côté du point de rotation détourné de l'agencement de masse d'amortissement (2).

8. Dispositif d'amortisseur d'oscillations selon l'une quelconque des revendications 1 à 7, **caractérisé en ce que** le dispositif de couplage (15) et le rail (3) ont une forme annulaire, dans lequel un rayon de courbure du dispositif de couplage (15) correspond à un rayon de courbure du rail (3).

9. Dispositif d'amortisseur d'oscillations selon l'une quelconque des revendications 1 à 8, **caractérisé en ce que** le dispositif de couplage (15) présente une ouverture de réception (18), dans laquelle l'élément porteur (10) dépasse dans une direction radiale.

10. Dispositif d'amortisseur d'oscillations selon l'une quelconque des revendications 1 à 9, **caractérisé en ce que** l'agencement de masse d'amortissement (2) présente au moins un élément d'actionnement qui coopère avec la poulie (6a, 6b) et peut être commandé au moyen d'au moins un régulateur.

11. Dispositif d'amortisseur d'oscillations selon la revendication 10, **caractérisé en ce que** l'agencement de masse d'amortissement (2) présente un détecteur avec lequel un état d'oscillation de l'agencement de masse d'amortissement (2) peut être capté, et avec lequel le régulateur peut être commandé.
